Europäisches Patentamt

European Patent Office

Office européen des brevets

(11) Publication number: **0 093 366**
**A1**

(12) **EUROPEAN PATENT APPLICATION**

(21) Application number: **83104019.1**

(22) Date of filing: **25.04.83**

(51) Int. Cl.³: **A 47 J 31/52**
**A 47 J 31/40**

(30) Priority: **04.05.82 IT 2105482**

(43) Date of publication of application:
**09.11.83 Bulletin 83/45**

(84) Designated Contracting States:
**AT BE CH DE FR GB LI LU NL SE**

(71) Applicant: **ILLYCAFFE S.p.A.**
**Via Flavia, 110**
**I-34147 Trieste(IT)**

(72) Inventor: **Illy, Ernesto**
**8, Via Locchi**
**I-34123 Trieste(IT)**

(74) Representative: **Ferraiolo, Ruggero**
**Viale Tunisia, 29**
**I-20124 Milano(IT)**

(54) **Automatic express coffee machine and process for brewing coffee according to the machine.**

(57) The automatic express coffee machine brews coffee from coffee pods (6) disposed in an extraction head (14,15) or in a plurality of extraction heads and comprises an electronic control system, (B) including a microprocessor and memory means, which operates all the operations of the machine and, in particular, carries out an adaptive control of the water temperature in a boiler (10) in order to keep that temperature in a narrow range of a selected temperature, controls that the volume of the hot water delivered to the extraction head or heads is in a narrow range of one or more predetermined volumes, in correspondence with each extraction head and carries out a diagnosis of the possible failures and depleted supplies by showing in a display in code the kind of failure or of needed supply. The process for brewing coffee is performed by the machine.

EP 0 093 366 A1

./...

FIG. 1

- 1 -

Automatic express coffee machine and process for brewing coffee according to the machine.

The invention relates to an automatic express coffee machine and a process for brewing coffee according to the machine.

There are known automatic machines that are able to brew coffee from measures of ground or lyophilised coffee or from coffee pods distributed along a water permeable paper tape. The inconveniences of the known automatic machines mainly reside in that the hot water temperature arriving in the extraction chamber varies widely, sometimes by 20°C, and this is detrimental to the constance and good quality of the brewed coffee. Moreover, the known machines are subject to accidents during operation and to failures which involve stoppage of the machine and requires a knowledgeable operator to detect the failure and to carry out repairs.

The machine according to this invention is an automatic machine which brews coffee from coffee pods in one or more extraction heads of known type and comprises electronic control means that carry out the control of all the functions and, particularly, the control of the water temperature within a range of ± 2°C about a predetermined reference value, the

*Dott. Ing. Ruggero Ferraiolo*

control of the water volumes delivered to the extraction chambers and the diagnosis of the possible failures and depleted supplies in the machine (e.g. coffee, water). The machine preferably comprises two extraction chambers in two extraction units in order to supply two coffee simoultaneously, an electronic control system based on a microprocessor SC/MP, a push-bottom panel for operating the machine, a display for showing signals to the users and a case comprising all above elements. More particularly: a) The microprocessor is associated with an electronic temperature sensor, adapted to sense temperature differences of 0,1°C, in such a way that the signals transmitted from the sensor are worked out for controlling an electric resistance for the water not only depending on the temperature of the water in the boiler, but also depending on the general temperature conditions in the machine; the temperature control is adaptive, in other words it is carried out depending on the conditions of the thermal efficiency of the combination electric resistance-boiler and, consequently, this control system is also able to show to an user the possible presence of limestone around the electric resistance. b) A flowmeter supplies to the microprocessor, through an operational amplifier working as a level detector a number of electrical impulses proportional to the volume of water that flows through the flowmeter and a memory in the microprocessor contains an operating programme that counts the supplied impulses and causes the closing of valves and the stopping of pumping means and, then, of the infusion made by the hot water in a coffee pod once a predetermined volume of hot water is passed to infusion. c) The microprocessor is so programmed that, any time it requests that a certain operation is carried out, simoultaneously it controls that the operation is regularly completed and proceeds to request the subsequent operations only in case of positive result of the control work; if the result of the control is negative, then the microprocessor does not proceed to request the subsequent operations, but causes the disactuation of all the operating means of the machine and makes to appear in a display in the machine panel a digital code corresponding with the failure or depleted supply in the machine.

The advantages of the invented machine are that the temperature of the water delivered to the extraction heads is made independent from the intermittence of the machine operation and, then, is made highly constant; that the volumes of the beverages delivered to the cup vary not over ± 2 cu.cm with respect to the predetermined volumes; that at least two coffee may be supplied simoultaneously, each one from one extraction chamber, the extraction units being completely independent one from another in case a machine is equipped with more extraction units; that an user is acquainted with the kind of failure (example: electrical resistance not working) or depleted supply (example: pods used up) in the machine so that the user may decide if he is in a position to repair the machine or he must call for assistance; that a user is saved from diagnosing the reason of a failure since the latter will appear in the display as a coded digital number.

In order to better understand the invention an embodiment

*Dott. Ing. Ruggero Fattriolo*

thereof will be described, with reference to the attached drawings in which:

FIG. 1 is a schematic diagram of a machine equipped with two extraction units,

FIG. 2 is a schematic diagram of the combination thermal sensor-electric resistance for the water heating,

FIG. 3 is a schematic diagram of the control system for the water volume delivered to the extraction units,

FIG. 4 is a flow chart of the self-diagnosis system for detecting the presence or absence of pods,

FIG. 5 is a general diagram of the microprocessor control including more detailed schematics of modules A and B,

FIG. 6 is a diagram showing the inner structure of the microprocessor,

FIG. 7 is a flow diagram of an initialization program,

FIG. 8 is a flow diagram of an idle program, and

FIGS. 9 and 10 are a flow diagram of the operating program and two subroutines.

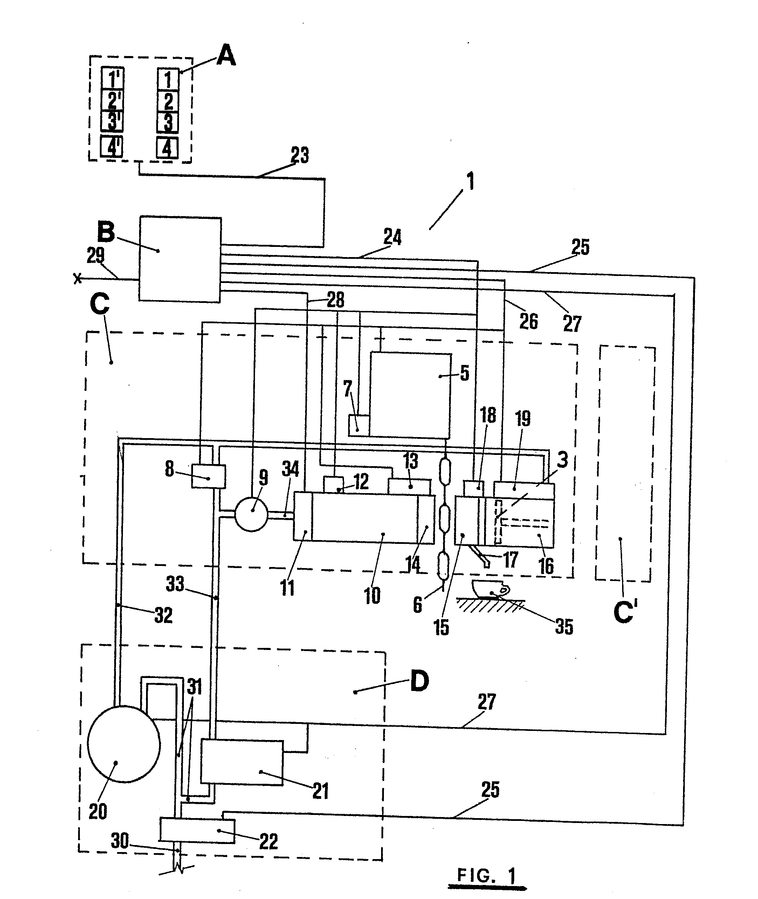

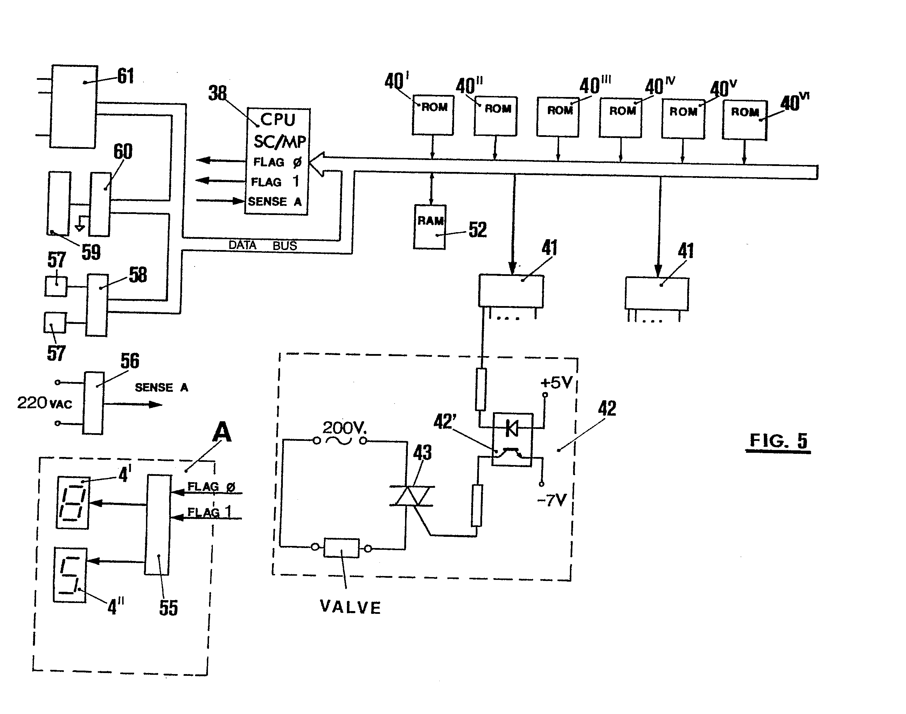

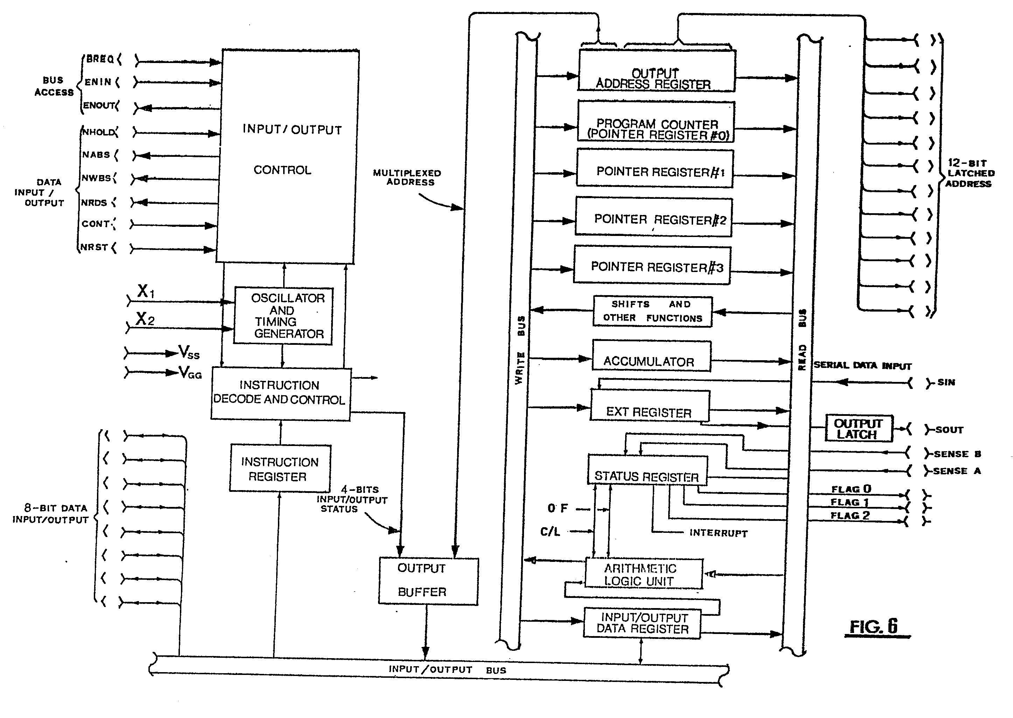

With reference to FIG. 1 the module A comprises two sets of push-bottons 1,1' - 2,2' - 3,3' and two seven segments

*Dott. Ing. Ruggero Ferraiolo*

displays 4,4'; the buttons 1, 1' serve to operate the brewing of an express coffee of standard volume (that in the following will be referred to as "normal coffee") respectively from the first and second extraction unit; the buttons 2, 2' serve to operate the brewing of an express coffee of more volume (that in the following will be referred to as "long coffee") respectively from the first and the second extraction unit; the buttons 3, 3' serve to stop the working, respectively, of the first and second extraction unit and of all other operating parts in the machine if a volume smaller than that programmed is requested; the two displays 4, 4' are adapted to show a set of coded digitals for showing failures and depleted supply in the machine, respectively, in the first and second extraction unit and also in the parts of the machine which are common with the two above units. B is a programming and electronic management module which comprises: a microprocessor SC/MP ISP-8A/600 of National Semiconductors (NS); memories MM 5204 of National Semiconductor wherein the operational programme is stored; memories MM 2112 (NS) wherein the data required for carrying out the operational programme are stored; a digital analogue convertor MM 5357 (NS); two flip-flop DM 8334 (NS) for keeping the commands; an optic buffer low-high tension MCA 230 Monsanto; a TRIAC RCA 2800 (M); an operational amplifier for clipping the signal delivered by the flowmeter 9 (see also FIGS. 5 and 6). The two modules C and C' are two equal coffee feeding and brewing modules, each comprising one extraction unit. The machine is generally designated 1.

Module C' is shown in block in order to simplify FIG. 1.

*Dott. Ing. Ruggero Ferraiolo*

Particularly, each module comprises: a motor 5 for moving the pod bearing tape 6 (in the following referred to as tape 6); a sensor 7 for the position of the tape 6; an electro-valve 8 for controlling the water inlet in a boiler; a flowmeter 9 for controlling the water volume delivered to the extraction head; a boiler 10 wherein water is heated; an electric resistance 11 for heating water; a sensor 12 for the temperature of the water in the boiler; a three-way valve 13 for controlling the water outlet from the boiler to the extraction head; a stationary extraction head 14; a mobile extraction head 15; an hydraulic cylinder 16 for operating the mobile extraction head; a duct 17 for delivering brewed coffee; a sensor 18 for the position of the mobile head; a three-way electro-valve 19 for controlling the hydraulic cylinder. The module C' comprises the same means as listed in connection with module C and is connected with modules B and D described herebelow so that the two extraction chambers work independently and, eventually, simultaneously. The module D is the module of the pumps which comprises a rotary pump 20, a reciprocating pump 21 and an electro-valve 22 controlling the water inlet in the hydraulic system in the machine from the hydraulic net.

The system comprises a rotary and a reciprocating pump and is in accordance with an invention of the applicant, which invention was the object of the patent application N° (EP) 81104104.5     ; the rotary pump is a "Procon" of Standex International GmbH from Krefeld (Federal Republic of Germany) and the reciprocating pump is a "Turmix" of Turmix A.G. from Rapperswill-Jona (Switzerland).

*Dott. Ing. Ruggero Ferraiolo*

Differently from the above patent application, in the example illustrated here below, the reciprocating pump 21, in case a long coffee is requested, works simoultaneously with the rotary pump 20.

The means of the module D work for the extraction unit in the module C as well as for the extraction unit in the module C'.

The FIG. 1 also shows: the wiring harness 23 connecting module A with module B; the wiring harness 24 connecting module B with modules C, C'; the wiring 25 connecting module B with the inlet electro-valve 22; the wiring harness 26 connecting module B with the electro-valves 8 and 19; the wiring harness 27 connecting module B with the pump motors 20 and 21; the wiring harness 28 connecting module B with the electric resistance 11; the electric cord 29 connecting module B with the electric net; the duct 30 for connecting the hydraulic system in the machine with a hydraulic net; the duct 31 for delivering water to pumps 20 and 21; the inlet duct 32 for the pump 20; the delivery duct 33 of the pump 21; the duct 34 for delivering water to the boiler 10.

The operation of the machine is shortly illustrated herebelow, the operation being feasible once the cord 29 is connected with an electric net, the duct 30 is connected with a hydraulic net and the machine is equipped with a tape.

Then, the machine, without being operated from an operator, automatically carries out a general checking of its own status and of the working of all its means. This is the

*Dott. Ing. Ruggero Ferraiolo*

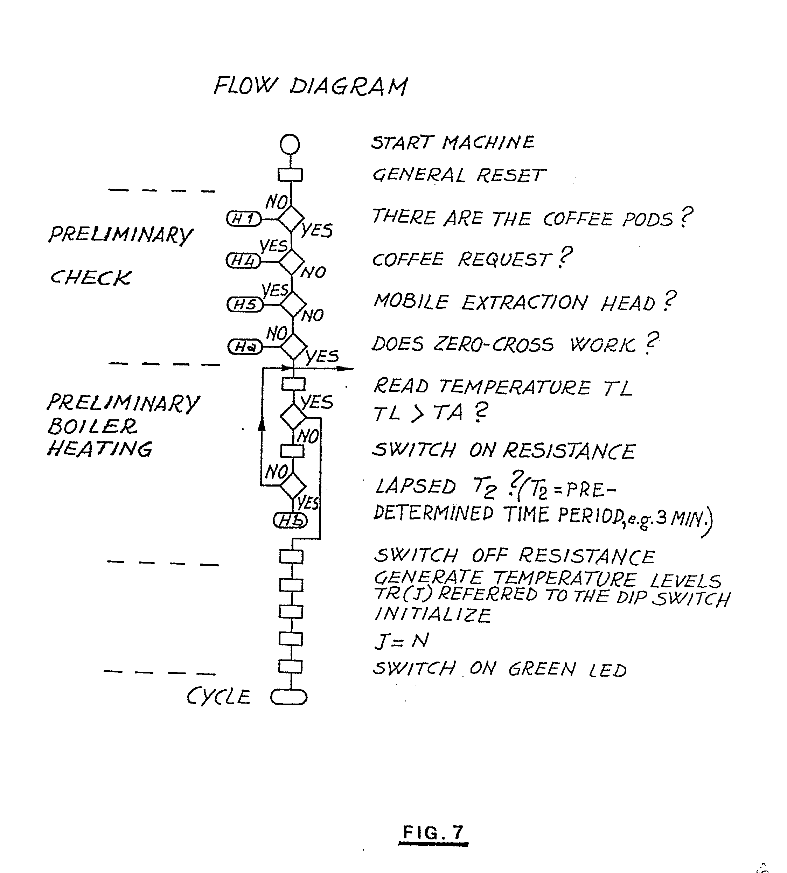

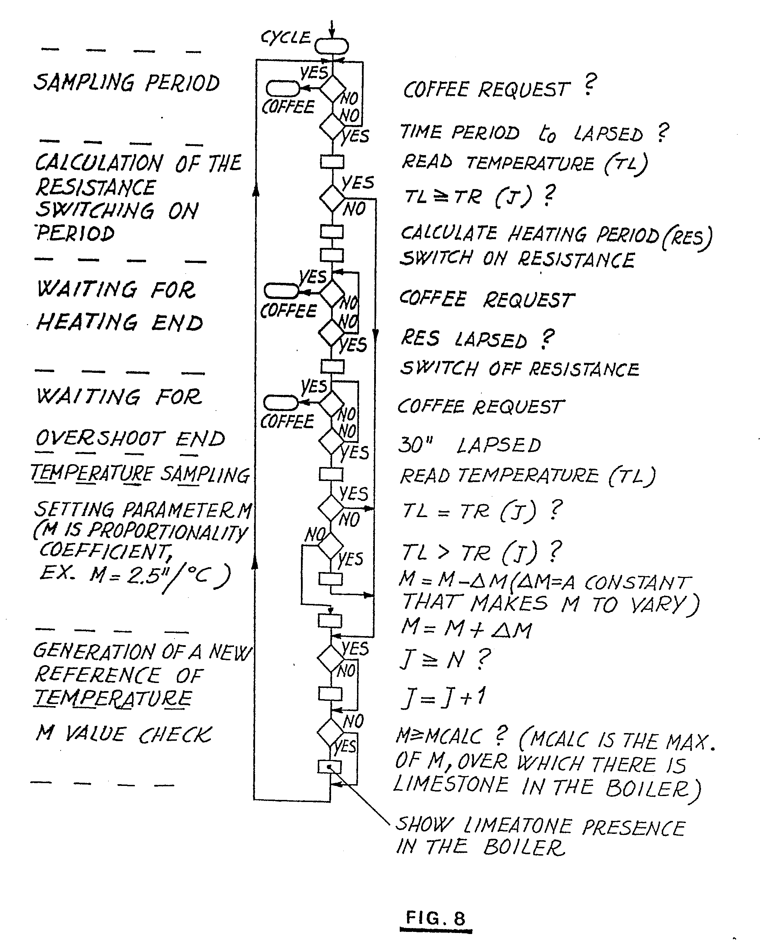

INITIALISATION routine shown in FIG. 7. If the result is satisfactory, module B energizes the resistance 11 until the water in the boiler 10 reaches the predetermined temperature. The work that the machine carries out from this moment until an user requests a coffee is to keep at the predetermined value the temperature in the boiler through the combination electrical resistance 11 - sensor 12. This status in the machine is shown by a conventional signal in the green LED in the displays 4, 4' in a front panel in the machine. All the other operative means in the machine are dormant and the mobile extraction heads 15 are spaced from the stationary extraction heads 14. The machine remains in the IDLE mode (FIG. 8) until coffee is requested.

As an user requests a coffee by pushing, for instance, the button 2, the machine performs the following processing procedure: checking the correct position of the tape 6 by reading the output of the sensor 7; if tape 6 is in position, switching off green LED in 4; opening electro-valve 22; actuating motor 5 for advancing the tape 6 so as to position a fresh pod in its seat in the stationary extraction chamber 14 and stop motor 5 when sensor 7 informs that the tape 6 has reached a correct position; actuating pump 20 and opening electro-valve 19 so that a piston 3 in the cylinder 16, displaced by the pressurized water and overcoming a return spring (not shown), forces the mobile extraction head 15 against the stationary extraction head 14, after that position sensor 18 operates the closing of the electro-valve 19; closing electro-valve 8 and actuating pump 21 which, through duct 33, delivers, through flowmeter 9, a small water volume

*Dott. Ing. Ruggero Ferraiolo*

defined by a controlled opening for approximately 0,5 seconds of electro-valve 13 in order to wet all the coffee mass in the pod prior to brewing to improve the final product; electro-valve 13 then remains closed for about four seconds time lenght and then opens again in order to inlet in the extraction chamber a quantity of hot water of about 60 cu.cm, under the control of flowmeter 9 which causes electro-valve 13 to close again once the 60 cu.cm of water have passed and discharging of the possible water excess through the third way of electro-valve 13; falling down of brewed coffee through the duct 17 in the cup 35; opening of the third way of electro-valve 19 in order to discharge water from cylinder 16; disactuating both pumps 20, 21; returning of mobile extraction head 15 under the action of a return spring (not shown); reactivating motor 5 in order to remove used pod from stationary extraction head 14 and repositioning tape 6 in a correct position; relightening of green LED in the display 4 in order to show that the machine is ready to supply a further coffee from the corresponding extraction unit. Thereupon module B re-lights green LED in the display 4 in order to show that the machine is again ready to supply a further coffee from the corresponding extraction unit.

It will be realized that, without departing from the area of the invention, the illustrated machine may be equipped with a reciprocating pump only and arranged to supply a standard coffee, for instance of 40 cu.cm volume, if the first extraction unit is operated, and a long coffee, for instance of 60 cu.cm volume, if the second extraction unit is operated; to obtain such a result it is necessary, in addition to

*Dott. Ing. Ruggero Ferraiolo*

abvious variations of the electric and hydraulic circuits, to programme the microprocessor so that the flowmeter causes to pass through 40 cu.cm of water in case the first extraction unit is operated and 60 cu.cm of water in case the second extraction unit is operated.

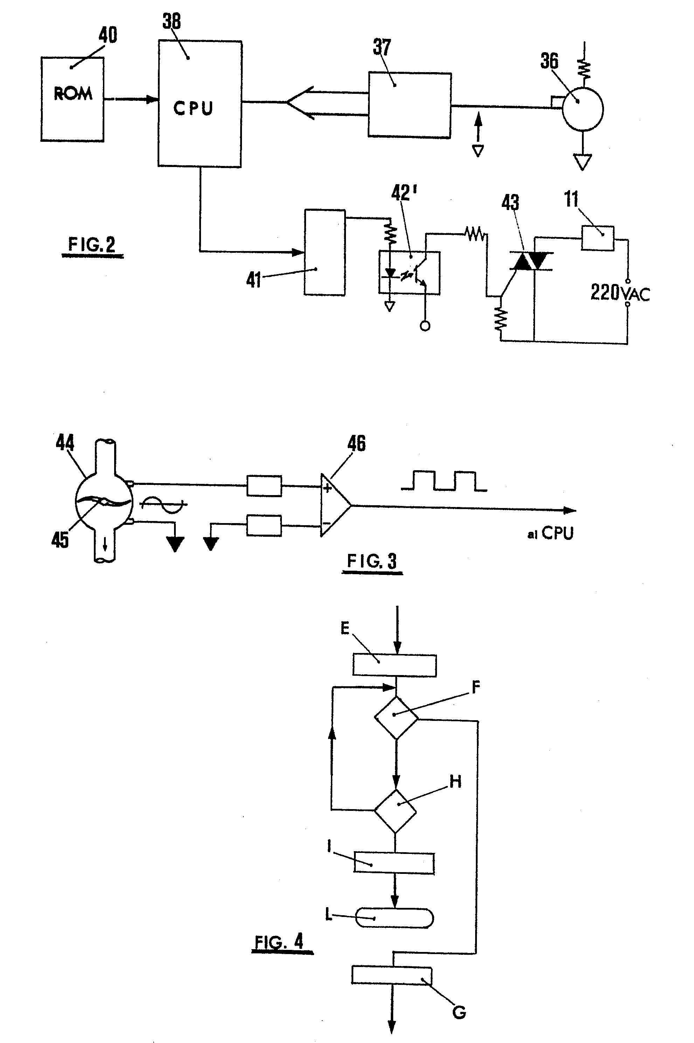

FIG. 2 shows a temperature sensor 36, LX 5600 (NS) which sends electrical signals to the digital-analogue convertor 37, MM 5357 (NS), which converts the electrical signals into pulses that, in turn, the microprocessor 38, SC/MP (NS) handles in order to calculate the length of time for which the heating resistance 11 must be energized, according to the programme introduced into the memory 40, MM 5204 (NS).

Between the microprocessor 38 and the heating resistance 11 there is interposed addressable letches 41, DM 8334 (NS), an optic separator 42' low-high tension, MCA 230, Monsanto, and an interruptor 43, TRIAC-RCA, 2800 M. Each latch 41 pilots an actuator, such as electrical resistance 11. So, under a command as received from the microprocessor 38 latch 41 will maintain the resistance energized until the water temperature in the boiler reaches the predetermined value. The triac 43 is a solid state device that can handle the large alternating voltage and current required to energize resistor 11. Light emitting diodes connect latch 41 with optical separator 42' and triac 43. The gate of triac 43 is controlled by optical separator 42'. The latter provides a relatively high reverse impedance. As such, separator 42 protects the microprocessor 38 and other low voltage elements against voltage or current surges that might occur if triac 43 failed. Other latches 41 are likewise protected.

FIG. 3 shows a particular flowmeter 44, from the firm KDM Electronic of Bussardweg 9 - Nürnberg. The rotor 45 sends electrical signals to an operational amplifier 46, proportionally with the passing through water flow. The operational amplifier 46, in turn, transmits the amplified signals to the microprocessor 38 that counts the signals according to the programme contained in the read-only memory 40 so that, once the predetermined volume is reached, module B causes the closing of the electro-valve 13 (FIG. 1) thereby terminating the infusion in an extraction head.

FIG. 4 is an example of the operating checking process and of self-diagnosis referred to the function "positioning of tape 6" (the means or parts referred to by numbers are shown in FIG. 1). The situation is on stage E and the motor 5 is caused to start in order to conveniently position a fresh pod into a stationary extraction head 14 (position F); when the sensor 7 confirms that a pod is set, the motor 5 stops (stage G); but if the sensor 7 does not confirm within a maximum predetermined time lenght (5 seconds) that a pod is set, from position H a signal is delivered which causes motor 5 to stop (position I) and then also a signal which causes a coded number in the display 4 (stage L) to appear to indicate a failure or a depleted supply in the pod feeding.

It will be realized that the features of the invented machine are such that the operative checking and self-diagnosis

*Dott. Ing. Ruggero Ferraiolo*

processes as illustrated above are effected for the operative checking and the self-diagnosis for the other functions of the machine.

FIG. 5 shows a more detailed schematic of modules A and B of FIG. 1. A microprocessor 38 is housed in a 40 pins, dual-in-line package. It handles 8-bit words, may receive 46 instructions, uses fixed point binary arithmetic, two's complement negative value, binary and binary coded decimal addition. It has one 8-bit accumulator, one 8-bit status register, one 8-bit auxiliary register, four 16-bit pointer registers, 5 memory and peripheral addressing modes, a 16-bit address bus, twelve of which are static and four are multiplexed on a bidirectional 8-bit, TRI-STATE data bus. The inner structure of the microprocessor, the data flow coming therefrom and the way of the outer connections are shown in FIG. 6.

The microprocessor 8 requires one single input of +5 Volts, with $\pm$ 10% tolerance, applied to pins $V_{ss}$ and $V_{gg}$. The clock is generated inside by connecting a quartz crystal or simply a capacitor with pins $X_1$ and $X_2$. The oscillator circuit and the impulse generator for the clock are comprised in the integrated circuit of microprocessor 8.

Further characteristics of FIG. 5 include: Six EPROM memories referred to by $40'$ to $40^{VI}$, 5204 type, into which the operational program is loaded. Two RAM memories referred to as a whole by 52, 2112 type, receive the data required for carrying out the operational program as loaded.

Dott. Ing. Ruggero Ferraiolo

Latches 41 are integrated circuits each containing 8 nos. flip-flop for controlling power circuits, 8334 type, for actuators, such as resistance 11 or the valves. A power interface 42 comprises an optic separator MCA 230 and a TRIAC, type 2800 M, respectively referred to by 42', 43 and connected in a conventional way. The TRIAC controls an operation, for instance, the electric resistance 11 or the pump 21 of FIG. 1, in the module B. There are as many power interfaces as there are operations to be controlled.

Front panel module A comprises integrated circuits shift-register 55, a couple of seven segments displays 4', 4" and related LED's and two sets of push-bottons each comprising three buttons for the user's selection.

A null detector 56 senses when the 220 VAC or other ac power source is at zero volts. The operation of any powered component, e.g. electrical resistance heater 11, pumps 20, 21 is delayed until the ac voltage is zero. Thus, unwanted noise is prevented. Hexadecimal clip switches 57 are operable to set the desired temperature of boiler 10. Switches 57 are connected between resistances 11 and tri-state buffers 58 to the data bus of microprocessor 38.

An eight line analog input receiver 59, type HI 508, receives analog signals, such as temperature signals, from the analog sensors, such as temperature sensor 12. Those analog signals are converted to digital signals by analog-to-digital converter 60, type MM 5337. The output of 60 is available to the CPU 38 via a data bus.

*Dott. Ing. Ruggero Ferraiolo*

A 16-bit multiplexer 61, type DM 8219, allows the CPU 38 to check the status (on/off) of various switches in module C and to communicate such status to CPU 38 via the data bus.

In operation, the program first executes an initialization routine as shown in FIG. 7. The machine program receives a START instruction and performs a GENERAL RESET of all variables, e.g. water temperature, time of brewing, etc. Some variables will be determined by operator selection and others by pre-programmed memory inputs. In a PRELIMINARY CHECK the program serially receives four inputs H1, H4, H5 and Ha. These inputs include data from sensors and from an operator, e.g. whether there are coffee pods, a request for coffee, the position of the module extraction heads and the operation of the zero-cross detector 56 upon receipt of such data, the program advances to a PRELIMINARY BOILER HEATING routine. During this routine, the program reads each boiler temperature, TL compares it to a predetermined desired temperature, TA (e.g. 102°C) and turns the heating resistance 11 on and off in accordance with the comparison. The resistance is switched on for no more than a predetermined safe time, T2 (e.g. three minutes). The heating routine sets a timer T2. The heating resistance 11 remains on until the TL equals or exceeds TA or the timer T2 counts a predetermined time, e.g. three minutes. Thereupon the resistance 11 is switched off. Next, the individual temperature TR (J) of each boiler is set as desired. A counter series recycles the initialization sub-routine for each boiler until all (J=N) are set at the desired, separate temperatures. Thereupon, a green LED on display A is

*Dott. Ing. Ruggero Ferraiolo*

energized indicating the machine is ready to brew coffee.

After initialization or between brewing cycles, the machine is idle. In the idle mode, the program performs a plurality of functions, including the maintenance of the boiler temperature at their respective predetermined valves. During this mode, the program may receive data input calling for brewing. In the interim, the program checks the boiler temperature TL after an elapsed time. If TL is equal to or greater than the desired temperature of the first boiler, the program increments the boiler count and checks the next boiler, until all are checked and verified to be at or above the desired temperature.

If any one boiler temperature is below the desired temperature, TR (J), then the respective heating resistance 11 is turned on for a predetermined time. If no coffee is required, within a short interval (e.g. 30 seconds) the temperature is read again. The temperature reading after such interval is compared to the reading before the interval and the difference is temperature as recorded. An arbitrary constant, M, is generated that is proportional to the number of secondsas required to raise the temperature one degree Centigrade. The program cycles until the individual boiler temperature is reached by turning on the resistance 11 in accordance with the proportionality constant, M.

If TL is equal to TR (J), then M is increased by a constant (AM) and the program cycles to the next boiler. If TL is greater than TR (J), then M is reduced by AM for the next

*Dott. Ing. Ruggero Ferraiolo*

boiler. Hence, the idle heating of each boiler is periodically and sequentially checked and maintained at a desired temperature.

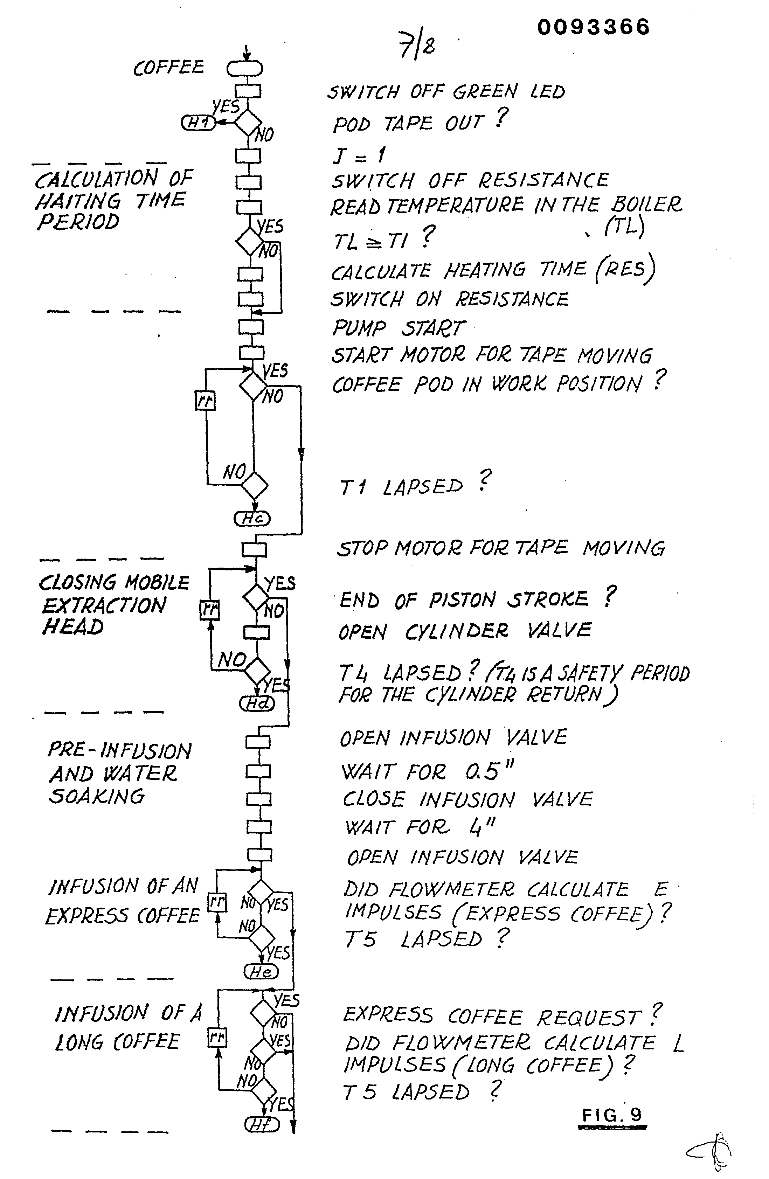

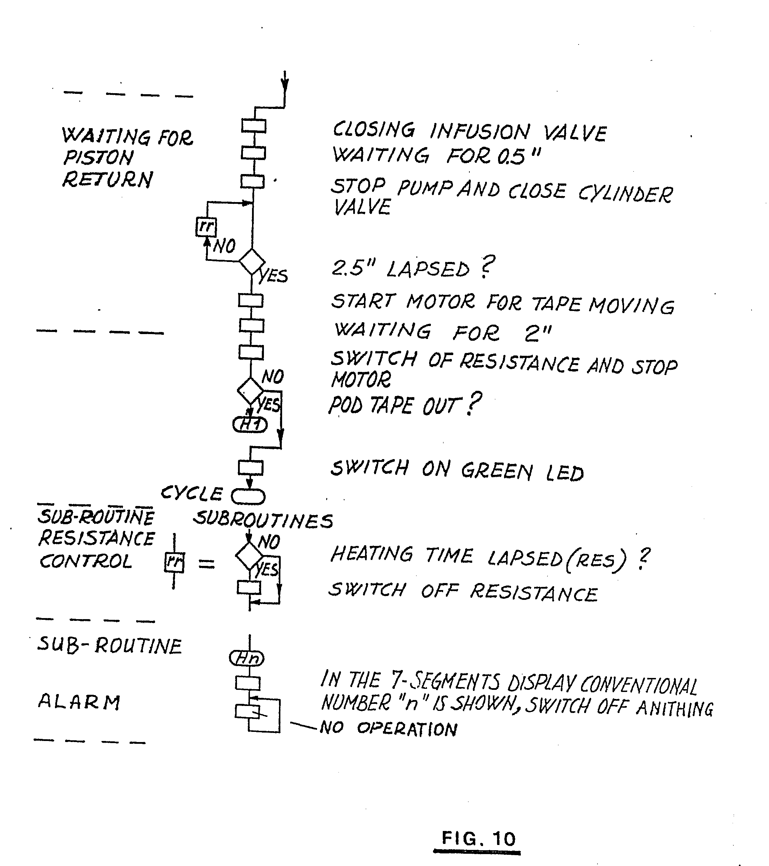

A flow chart for the coffee brewing routine is given in FIGS. 9, 10. The flow chart substantially follows the description of the operation of the machine given above.

Those skilled in the art will recognize that the rectangular boxer are preprogrammed instructions wich the machine will execute in sequential order as indicated. The diamond boxes indicate decisions that the program makes based upon its memory and various inputs. Inputs to the program are indicated by the oval boxes.

Dott. Ing. Ruggero Ferraiolo

Claims.

1.    An automatic coffee machine for brewing express coffee from a coffee pod disposed in an extraction head in an extraction unit comprising a controlled electric resistance for heating water in a boiler, an outer panel bearing control means operable by an user for selecting a coffee and operating means for locating a coffee pod of a pod bearing tape in the extraction head, pumping means for pumping hot water volumes into the extraction head, such volumes being different depending on the selection as effected by the user, characterized in that the machine further comprises one or more extraction units, flow signal generating means for generating a signal representative of the volume of water delivered to each extraction unit, memory and control means, including a microprocessor, for storing data corresponding to a plurality of possible volumes of water to be delivered to each unit, means for receiving selective signals and flow signals for comparing said received signals to the data stored in said memory and for operating said delivery means in accordance with said received signals and memory to deliver the selected volume of heated water to the pod, said flow signal generating means comprising a flowmeter for measuring the water flowing from the delivery means to the extraction unit and comprising means for generating a digital electrical signal comprising a plurality of pulses whose total is proportional to the volume of water delivered to the extraction unit.

2.    A machine according to claim 1 characterized in that the  memory of said microprocessor includes data

*Dott. Ing. Ruggero Ferraiolo*

corresponding to a plurality of total predetermined flowmeter digital pulses for each extraction unit, means for selecting one of said plurality of total predetermined pulses for each extraction unit in accordance with said selection means, said microprocessor including means for comparing the input flowmeter pulses to said selected data, means for terminating the delivery of water to each extraction unit when the number of received flowmeter pulses corresponds to the selected stored data, means for receiving data about a plurality of serial steps in a process of brewing coffee, means for disabling the machine from proceeding from one step to the next step in the series until the prior step has been completed, the microprocessor being operatively coupled to one or more means in said machine through an electrical circuit including an optical separator and a triac device for protecting the microprocessor.

3. A machine according to claims 1 and 2 characterized in that it further comprises means for sensing the temperature of the water in the boiler and generating an electrical signal representative of the sensed temperature and that said microprocessor further comprises memory means including data corresponding to a predetermined temperature control means adapted to receive the temperature signals, compare the received signals to the stored temperature data and to control the electrical energy supplied to the boiler in accordance with said comparison.

4. A machine according to the preceeding claims characterized in that it further comprises display means operatively coupled to the microprocessor for displaying an indication of the status of each step and display means indicating a code representative of the incompleted step whereby a user may understand the source of malfunction of the machine.

5. A process for brewing coffee by means of a machine according to the preceeding claims characterized in that it generates a signal corresponding to the selected volume of water and a signal corresponding to the delivered volume of water, stores data corresponding to a plurality of selectable volumes of water, compares the generated delivered volume of water to the selected volume of water, determinates the delivery of water to the pod when the delivered volume signal corresponds to the selected volume data, generates a signal representative of the water temperature, stores data corresponding to a predetermined temperature, compares the generated signal to the stored temperature data and controls the thermal energy delivered to the water in accordance with the compared temperature signal and temperature data.

*Dott. Ing. Ruggero Ferraiolo*

FIG. 1

FIG.2

FIG. 3

al CPU

FIG. 4

FIG. 5

**FIG. 6**

## FLOW DIAGRAM

| | |
|---|---|
| | START MACHINE |
| | GENERAL RESET |
| PRELIMINARY CHECK | THERE ARE THE COFFEE PODS ? |
| | COFFEE REQUEST ? |
| | MOBILE EXTRACTION HEAD ? |
| | DOES ZERO-CROSS WORK ? |
| PRELIMINARY BOILER HEATING | READ TEMPERATURE TL |
| | $TL > TA$ ? |
| | SWITCH ON RESISTANCE |
| | LAPSED $T_2$ ?($T_2$ = PREDETERMINED TIME PERIOD, e.g. 3 MIN.) |
| | SWITCH OFF RESISTANCE |
| | GENERATE TEMPERATURE LEVELS TR(J) REFERRED TO THE DIP SWITCH |
| | INITIALIZE |
| | $J = N$ |
| CYCLE | SWITCH ON GREEN LED |

H1, H4, H5, H2, H5

FIG. 7

SAMPLING PERIOD

CALCULATION OF THE
RESISTANCE
SWITCHING ON
PERIOD

WAITING FOR
HEATING END

WAITING FOR

OVERSHOOT END

TEMPERATURE SAMPLING

SETTING PARAMETER M
(M IS PROPORTIONALITY
COEFFICIENT,
EX. $M = 2.5''/°C$ )

GENERATION OF A NEW
REFERENCE OF
TEMPERATURE

M VALUE CHECK

CYCLE

COFFEE

COFFEE

COFFEE

COFFEE REQUEST ?

TIME PERIOD $t_0$ LAPSED ?
READ TEMPERATURE (TL)

$TL \geqq TR$ (J) ?

CALCULATE HEATING PERIOD (RES)
SWITCH ON RESISTANCE

COFFEE REQUEST

RES LAPSED ?
SWITCH OFF RESISTANCE

COFFEE REQUEST

30" LAPSED
READ TEMPERATURE (TL)

$TL = TR$ (J) ?

$TL > TR$ (J) ?
$M = M - \Delta M$ ($\Delta M = A$ CONSTANT
THAT MAKES M TO VARY)
$M = M + \Delta M$

$J \geqq N$ ?

$J = J + 1$

$M \geqq MCALC$ ? (MCALC IS THE MAX.
OF M, OVER WHICH THERE IS
LIMESTONE IN THE BOILER)

SHOW LIMEATONE PRESENCE
IN THE BOILER

FIG. 8

COFFEE

SWITCH OFF GREEN LED
POD TAPE OUT ?
J = 1
SWITCH OFF RESISTANCE
READ TEMPERATURE IN THE BOILER (TL)
TL ≥ TI ?
CALCULATE HEATING TIME (RES)
SWITCH ON RESISTANCE
PUMP START
START MOTOR FOR TAPE MOVING
COFFEE POD IN WORK POSITION ?

CALCULATION OF HAITING TIME PERIOD

T1 LAPSED ?

STOP MOTOR FOR TAPE MOVING

CLOSING MOBILE EXTRACTION HEAD

END OF PISTON STROKE ?
OPEN CYLINDER VALVE

T4 LAPSED ? (T4 IS A SAFETY PERIOD FOR THE CYLINDER RETURN)

PRE-INFUSION AND WATER SOAKING

OPEN INFUSION VALVE
WAIT FOR 0.5"
CLOSE INFUSION VALVE
WAIT FOR 4"
OPEN INFUSION VALVE

INFUSION OF AN EXPRESS COFFEE

DID FLOWMETER CALCULATE E IMPULSES (EXPRESS COFFEE) ?
T5 LAPSED ?

INFUSION OF A LONG COFFEE

EXPRESS COFFEE REQUEST ?
DID FLOWMETER CALCULATE L IMPULSES (LONG COFFEE) ?
T5 LAPSED ?

FIG. 9

WAITING FOR
PISTON
RETURN

CLOSING INFUSION VALVE
WAITING FOR 0.5"

STOP PUMP AND CLOSE CYLINDER
VALVE

rr

NO

YES

2.5" LAPSED ?

START MOTOR FOR TAPE MOVING

WAITING FOR 2"

SWITCH OF RESISTANCE AND STOP
MOTOR

NO

YES

POD TAPE OUT ?

H1

SWITCH ON GREEN LED

CYCLE      SUBROUTINES

SUB-ROUTINE
RESISTANCE
CONTROL        rr  =

NO

YES

HEATING TIME LAPSED (RES) ?

SWITCH OFF RESISTANCE

SUB-ROUTINE


ALARM

Hn

IN THE 7-SEGMENTS DISPLAY CONVENTIONAL
NUMBER "n" IS SHOWN, SWITCH OFF ANITHING

NO OPERATION

FIG. 10

# EUROPEAN SEARCH REPORT

European Patent Office

Application number

EP 83 10 4019

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,Y | EP-A-0 041 657 (ILLYCAFFE S.p.A.) <br> * Whole document * | 1 | A 47 J 31/52 <br> A 47 J 31/40 |
| Y | GB-A-2 067 888 (BREVETTI GAGGIA S.p.A.) <br> * Whole document * | 1,2,5 | |
| A | FR-A-2 428 827 (OFFICINA RANCILIO S.A.S.) <br> * Page 4, lines 30-39; figures 1-4 * | 1,2,5 | |
| A | BE-A- 888 878 (STAAR S.A.) <br> * Whole document * | 2-4 | |
| A | DE-A-2 342 833 (VAILLANT) <br> * Whole document * | 3 | TECHNICAL FIELDS SEARCHED (Int. Cl. ³) |
| A | DE-A-2 748 115 (DART GmbH) <br> * Whole document * | 1 | A 47 J |
| A | GB-A-2 077 063 (GROSS et al.) <br> * Whole document * | 1 | |

The present search report has been drawn up for all claims

| Place of search | Date of completion of the search | Examiner |
|---|---|---|
| THE HAGUE | 08-08-1983 | SCHARTZ J. |